# EUROPÄISCHE PATENTSCHRIFT

(11) **EP 1 431 812 B1**
(45) Veröffentlichungstag und Bekanntmachung des Hinweises auf die Patenterteilung: **05.10.2005**
(21) Anmeldenummer: 02028673.8
(22) Anmeldetag: 20.12.2002
(51) Int. Cl.: G03B 42/02, G01T 1/29, H04N 1/00, H04N 1/04, H04N 1/12, H04N 1/14

(54) **Vorrichtung zum Auslesen einer Bildinformation kombiniert mit einer Hardcopyeinrichtung**
Device used for reading image information combined with a hardcopy printer
Dispositif de lecture des informations d'une image combiné avec une imprimante

(43) Veröffentlichungstag der Anmeldung: 23.06.2004
(73) Patentinhaber: Agfa-Gevaert AG, 51373 Leverkusen (DE)
(72) Erfinder: Müller, Jürgen, 81545 München (DE)

(56) Entgegenhaltungen:
- DE-A- 19 646 606
- US-B1- 6 462 351
- PATENT ABSTRACTS OF JAPAN vol. 016, no. 460 (P-1427), 24. September 1992 (1992-09-24) & JP 04 163438 A (FUJI PHOTO FILM CO LTD), 9. Juni 1992 (1992-06-09)
- PATENT ABSTRACTS OF JAPAN vol. 2000, no. 15, 6. April 2001 (2001-04-06) & JP 2000 350719 A (FUJI PHOTO FILM CO LTD), 19. Dezember 2000 (2000-12-19)

## Beschreibung

Die Erfindung betrifft eine Vorrichtung zum Auslesen einer Bildinformation aus einem fotostimulierbaren Bildträger mit einem ersten Gehäuse, in dem ein Scanner zum Erfassen der Bildinformation des Bildträgers vorgesehen ist, wobei das erste Gehäuse eine Öffnung zum Zuführen des in einer Kassette befindlichen Bildträgers zum Scanner aufweist.

Eine solche gattungsgemäße Vorrichtung ist in der DE 196 46 606 beschrieben. Die in dieser Druckschrift beschriebene Vorrichtung wird vor allem für ein digitales Radiografieverfahren verwendet. Zum Auslesen einer Bildinformation aus einem fotostimulierbaren Bildträger, insbesondere einer Phosphorfolie, wird eine Röntgenkassette, die den Bildträger beinhaltet, in einen Scanner zum Erfassen der Bildinformation eingegeben. Auch dieser Scanner weist folglich eine Öffnung zum Zuführen des in einer Kassette befindlichen Bildträgers auf. Nachteilig ist jedoch, dass die Kassette entweder per Hand an die Öffnung gehalten werden muß, bis sie in diesem Fall eingezogen wird, oder dass eine extra für diesen Zweck vorgesehene Kassettenhalterung zur Verfügung gestellt werden muss, um die Kassette an der Öffnung des ersten Gehäuses zu positionieren. Während die Bereitstellung der Kassette per Hand sehr umständlich erscheint, ist die Realisierung einer extra Kassettenhalterung materialaufwändig und, was viel wesentlicher ist, sie erfordert außerdem einen relativ hohen Platzaufwand.

Es ist daher Aufgabe der vorliegenden Erfindung eine gattungsgemäße Vorrichtung derart weiterzubilden, dass diese Nachteile vermieden werden.

Zur Lösung dieser Aufgabe dient eine gattungsgemäße Vorrichtung, bei der ein zweites Gehäuse einer Hardcopyeinrichtung so ausgebildet und nahe dem ersten Gehäuse so angeordnet ist, dass das zweite Gehäuse zum Positionieren der Kassette an der Öffnung des ersten Gehäuses dient.

Bei der erfindungsgemäßen Lösung wird damit eine andere für ein digitales Radiografieverfahren wesentliche Komponente als Kassettenhalterung zur Bereitstellung einer Kassette an der Öffnung des ersten Gehäuses verwendet. Die Hardcopyeinrichtung verwirklicht somit eine weitere Funktion, was dazu beiträgt, dass die erfindungsgemäße Vorrichtung äußerst kompakt und platzsparend ist. Außerdem stellt das Gehäuse der Hardcopyeinrichtung eine äußerst stabile Kassettenhalterung dar.

Das zweite Gehäuse kann zu diesem Zweck direkt oder indirekt mit dem ersten Gehäuse verbunden sein. Bei einer indirekten Verbindung ist ein Zwischenelement vorgesehen, welches das erste Gehäuse mit dem zweiten verbindet.

Eine besonders vorteilhafte Ausgestaltung der Erfindung sieht vor, dass die erfindungsgemäße Vorrichtung eine Workstationeinrichtung zum Sichtbarmachen der erfassten Bildinformation aufweist, die an dem ersten Gehäuse angebracht ist. In diesem Fall sind die drei wesentlichen Komponenten zur Durchführung eines digitalen Radiografieverfahrens in einer Vorrichtung enthalten, so dass in seiner Gesamtheit ein sehr kompaktes und platzsparendes System bereitgestellt wird, das daneben durch die Vermeidung von langen Wegen zwischen den unterschiedlichen Verfahrensabschnitten außerdem sehr zeitsparend ist.

Die Workstationeinrichtung kann einen Bildschirm und/oder ein Bedienfeld aufweisen. Während durch den Bildschirm die erfasste Bildinformation anschaulich gemacht werden kann, ist es mit dem Bedienfeld möglich, Modifizierungen der erfassten Bildinformation vorzunehmen. Dabei kann insbesondere eine Zoomfunktion realisiert werden, verschiedene Dichtestufen können ausgewählt und ein Differenzbild kann erhalten werden. Außerdem kann durch das Bedienfeld eine Steuerung der anderen Geräte, wie des Scanners und/oder der Hardcopyeinrichtung, erfolgen. Das Bedienfeld ist vorzugsweise als sogenanntes Touch Screen ausgebildet.

Der Bildschirm und/oder das Bedienfeld kann im Wesentlichen parallel zu einer größten Seitenfläche des ersten Gehäuses und/oder eines dritten Gehäuses der Workstationeinrichtung angeordnet sein. Auf diese Weise kann die Workstationeinrichtung besonders flach ausgeführt werden, so dass sie auch gut vor dem ersten Gehäuse angeordnet werden kann. Eine solche Anordnung der Workstationeinrichtung ist besonders zweckmäßig, weil die vordere Oberfläche des ersten Gehäuses ohnehin nicht zugänglich für einen Anwender sein muss, so dass sie der Verankerung eines weiteren Gerätes dienen kann.

Das erste Gehäuse und/oder das zweite Gehäuse und/oder ein drittes Gehäuse der Workstationeinrichtung können vorteilhafterweise modular zusammensetzbar sein. Neben einer rein mechanischen Kopplung ist die Installation von sogenannten "plug and play"-Anschlüssen äußerst vorteilhaft, da die erfindungsgemäße Vorrichtung in diesem Fall auch von einem Laien aufgebaut werden kann und gegebenenfalls umgerüstet werden kann, wenn eine andere Gerätekombination erwünscht ist oder eine Komponente gerade nicht verwendet wird. Außerdem kann auf die Verwendung von Verbindungsleitungen verzichtet werden, die häufig optisch störend sind und wiederum den Anforderungen entsprechend positioniert werden müssen.

In einer weiteren vorteilhaften Ausgestaltung der Erfindung sind das erste und/oder das zweite Gehäuse und/oder ein drittes Gehäuse der Workstationeinrichtung mit jeweils einer größten Seitenfläche im Wesentlichen parallel angeordnet. Um eine möglichst flache Anordnung zu erreichen, sind das erste und das zweite Gehäuse in einer weiteren Weiterbildung der Erfindung mit jeweils einer größten Seitenfläche im Wesentlichen entlang einer Ebene angeordnet. Von besonderem Vorteil ist diese Anordnung, wenn die erfindungsgemäße Vorrichtung gleichzeitig zu einer Wandmontage ausgebildet ist. Die Wandmontage hat den Vorteil, dass keinerlei Standplatz benötigt wird, der in Räumlichkeiten, in denen ein digitales Radiografieverfahren durchgeführt wird, ohnehin in der Regel rar ist.

Das erste Gehäuse und/oder das zweite Gehäuse können zur hängenden Wandmontage mindestens eine Ausgestaltung zur Aufhängung an eine Wand, insbesondere mindestens ein Aufhängeelement aufweisen. Eine Ausgestaltung zur Aufhängung umfasst nicht nur ein Aufhängeelement, sondern auch eine Einstülpung oder eine Öffnung in einem Gehäuse, in die ein Befestigungselement eingreift, das das erste und/oder das zweite Gehäuse mit der Wand, an der die Wandmontage erfolgen soll, verbindet.

Eine besonders vorteilhafte Ausgestaltung der Erfindung sieht vor, dass die mindestens eine Ausgestaltung zur Aufhängung derart ausgebildet ist, dass die Vorrichtung höhenverstellbar ist. Alternativ oder zusätzlich kann auch ein Befestigungselement, das die Vorrichtung mit der Wand verbindet, eine Höhenverstellbarkeit zulassen beziehungsweise zur Höhenverstellung ausgebildet sein. Diese Weiterbildung der Erfindung erlaubt eine hohe Variabilität des Systems. Einerseits kann die erfindungsgemäße Vorrichtung auf diese Weise von einer sitzenden oder von einer stehenden Person bedient werden. Sie kann andererseits auch der jeweiligen Größe einer Bedienperson angepasst werden, so dass unabhängig von der Bedienperson ein hoher Komfort bei der Bedienung gewährleistet ist. Außerdem kann die erfindungsgemäße Vorrichtung in eine Position überführt werden, in der die Vorrichtung andere Arbeiten nicht behindert. So wird ein äußerst flexibles System geschaffen, das nahezu überall untergebracht werden kann.

Vorteilhafterweise kann die Vorrichtung derart zur Wandmontage ausgebildet sein, dass eine größte Seitenfläche des ersten und/oder des zweiten Gehäuses bei der Wandmontage im Wesentlichen parallel zu einer Wand positionierbar ist.

Eine besonders flache Anordnung an der Wand kann auf diese Weise realisiert werden. Eine Behinderung einer anderen Tätigkeit ist damit weitgehend ausgeschlossen.

Eine weitere besonders vorteilhafte Ausgestaltung der Erfindung sieht vor, dass die Öffnung des Scanners derart ausgebildet ist, dass der in der Kassette befindliche Bildträger entlang einer Ebene parallel zu einer größten Seitenfläche des ersten Gehäuses in den Scanner einführbar ist. Der Scanner kann mit Hilfe dieser Ausgestaltung besonders flach ausgebildet sein.

Der Scanner kann außerdem derart ausgebildet sein, dass der fotostimulierbare Bildträger innerhalb des Scanners im Wesentlichen parallel zu einer größten Seitenfläche des ersten Gehäuses auslesbar und/oder bewegbar ist. Der Vorteil dieser Ausführung ist wiederum die Möglichkeit einer besonders flachen Gestaltung des Scanners mit einer geringen Gerätetiefe.

Die von dem zweiten Gehäuse geführte mindestens eine Kassette kann im Wesentlichen parallel zu einer größten Seitenfläche des ersten und/oder des zweiten Gehäuses angeordnet sein. Die Kassette kann folglich so angeordnet werden, dass das System besonders kompakt ist und so zu keiner Behinderung führt.

Das zweite Gehäuse kann zur Aufnahme von Hardcopyrohlingen ausgebildet sein und ein Abdeckelement aufweisen, das zum Positionieren der Kassette an der Öffnung des ersten Gehäuses dient. Vorteilhafterweise hat das Abdeckelement in diesem Fall eine Doppelfunktion, neben dem Positionieren der Kassette dient es nämlich auch der Einführung von Hardcopyrohlingen in das zweite Gehäuse. Es wird zu diesem Zweck gegenüber dem Rest des zweiten Gehäuses bewegt, so daß das zweite Gehäuse geöffnet und wieder geschlossen werden kann.

Besonders vorteilhaft ist es außerdem, wenn in dem ersten Gehäuse der Vorrichtung eine Löscheinrichtung zum Löschen der Bildinformation des Bildträgers vorgesehen ist, da der Bildträger mit Hilfe dieser Ausgestaltung direkt nach dem Erfassen der Bildinformation des Bildträgers für eine neue Röntgenaufnahme verwendet werden kann, ohne dass ein zusätzliches Gerät benötigt wird. Dies führt zu einer immensen Zeitersparnis.

Weitere Einzelheiten, Merkmale und Vorteile der Erfindung ergeben sich aus den im Folgenden anhand von Zeichnungen beschriebenen Ausführungsbeispielen.

Es zeigen:
- Fig.1: ein schematisch dargestellter Aufbau einer Ausführungsform einer erfindungsgemäßen Vorrichtung;
- Fig. 2: eine schematische Darstellung einer weiteren Ausführungsform einer erfindungsgemäßen Vorrichtung;
- Fig. 3: eine schematisch dargestellte Frontansicht eines Scanners der erfindungsgemäßen Vorrichtung;
- Fig. 4: eine schematisch dargestellte Rückansicht eines Scanners einer erfindungsgemäßen Vorrichtung;
- Fig. 5: eine teilweise als Querschnitt dargestellte schematische Ansicht eines Scanners einer erfindungsgemäßen Vorrichtung;
- Fig. 6: eine schematisch dargestellte Frontansicht einer Hardcopyeinrichtung einer erfindungsgemäßen Vorrichtung;
- Fig. 7: eine schematisch dargestellte Rückansicht einer Hardcopyeinrichtung einer erfindungsgemäßen Vorrichtung; und
- Fig. 8: eine teilweise geschnittene Darstellung einer Hardcopyeinrichtung einer erfindungsgemäßen Vorrichtung.

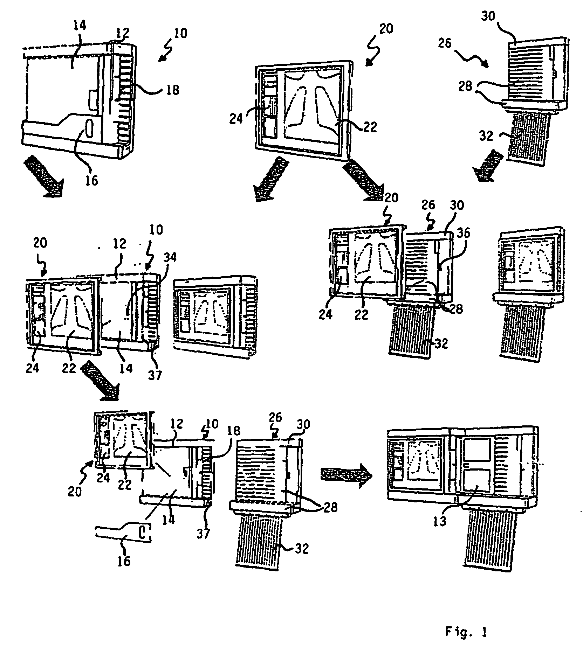

Figur 1 zeigt eine modular aufgebaute Vorrichtung zur Durchführung eines digitalen Radiographie-Verfahrens. Die hier dargestellte Ausführungsform dieser Vorrichtung umfasst im Wesentlichen bis zu drei Komponenten.

Eine erste Komponente bildet ein Scanner 10 mit einem Gehäuse 12. Der Scanner 10 dient den Erfassen einer Bildinformation eines in einer Kassette 13 bereitgestellten fotostimulierbaren Bildträgers, welcher eine Phosphorschicht umfaßt. Die Kassette 13 mit dem auszulesenden Bildträger wird hierzu einer seitlichen Öffnung 18 des Scanners 10 zugeführt. Dies ist im rechten unteren Teil der Figur 1 beispielhaft dargestellt. Aus Gründen einer besseren Anschaulichkeit wurde auf die Darstellung der Kassette 13 in den anderen Figurenteilen verzichtet.

Der Scanner 10 weist im Frontbereich, d. h. in einem Bereich vor dem Scanner 10, eine Kassettenhalterung auf, welche zur Aufnahme mindestens einer Kassette 13 mit dem auszulesenden Bildträger ausgebildet ist. Ein Halterungselement 14 der Kassettenhalterung wird hierbei durch einen Gehäusebereich, im dargestellten Beispiel eine Frontplatte, des Scanners 10 gebildet. Ein weiteres, abnehmbares Halterungselement 16 ist derart am Gehäuse 12 des Scanners 10 angeordnet, daß mindestens eine Kassette 13 zwischen den beiden Halterungselementen 14 und 16 gehalten werden kann. In der Kassettenhalterung können Kassetten 13 im Frontbereich des Scanners 10 gelagert werden, bevor oder nachdem sie im Scanner 10 ausgelesen werden bzw. worden sind.

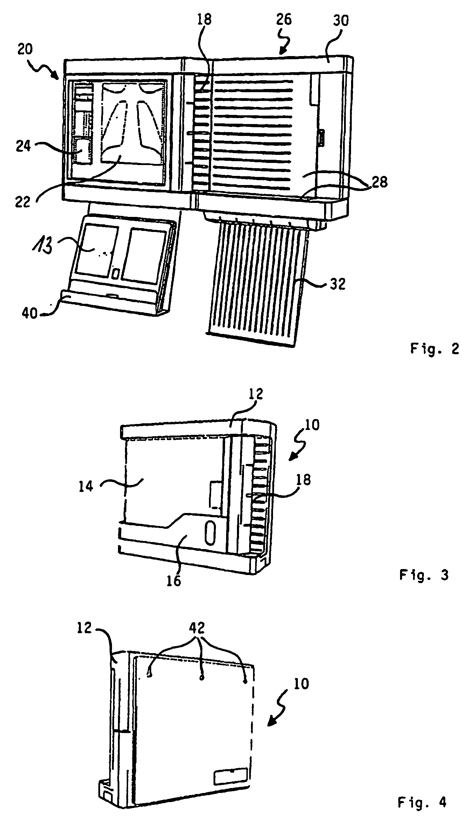

Alternativ oder zusätzlich kann aber auch eine laterale Kassettenhalterung (nicht dargestellt) vorgesehen sein, die seitlich des Scanners 10 positioniert ist und auf diese Weise gleichzeitig dazu dient, eine oder mehrere Kassetten 13 für den Scanprozess bereitzustellen. Vorzugsweise ist die laterale Kassettenhalterung derart ausgebildet und im Bereich der Öffnung 18 des Scanners 10 angeordnet, dass die von ihr aufgenommenen Kassetten direkt der Öffnung 18 des Scanners 10 zugeführt werden können. Wie weiter unten im Zusammenhang mit dem in Figur 2 dargestellten Ausführungsbeispiel noch näher erläutert wird, kann die Kassettenhalterung auch unterhalb des Scanners 10 positioniert werden.

Da der in Figur 1 dargestellte Scanner 10 dazu geeignet ist, Bildinformationen von Bildträgern unterschiedlicher Größe zu erfassen, müssen auch die Halterungselemente 14 bzw. 16 der Kassettenhalterung derart ausgebildet sein, dass sie unterschiedlich große Kassetten aufnehmen können. Aus diesem Grund ist es auch zweckmäßig, mehrere Kassettenhalterungen vorzusehen, die für jeweils eine Kassettengröße optimal dimensioniert sind. Generell erhöht die Anordnung einer Kassettenhalterung in der unmittelbaren Nähe des Scanners 10 die Geschwindigkeit des Arbeitsvorgangs, der mit dem Auslesen der Bildinformation verbunden ist. Vorteilhafterweise ist die Kassettenhalterung stets parallel zum Scanner 10 angeordnet.

Als zweite Komponente der Vorrichtung ist eine Workstationeinrichtung 20 zum Sichtbarmachen der erfassten Bildinformation vorgesehen. Neben einer zentralen Recheneinheit (nicht dargestellt), in welcher die im Scanner 10 erfassten, digitalen Bildinformationen verarbeitet und/oder gespeichert werden können, umfasst die Workstationeinrichtung 20 einen Bildschirm 22 zur visuellen, insbesondere graphischen, Darstellung der erfassten Bildinformation. Um Platz zu sparen, wird als Bildschirm 22 vorzugsweise ein Flachbildschirm auf der Basis von Flüssigkristallen (LCDs) und Dünnschichttransistoren (TFTs) eingesetzt.

Zusätzlich zur Darstellung der erfassten Bildinformation kann der Bildschirm 22 auch so ausgestaltet sein, daß dieser als Hintergrundbeleuchtung für konventionelle Röntgenfilme dienen kann. Vorzugsweise ist hierzu der Bildschirm 22 in einem Beleuchtungsmodus betreibbar, in welchem die Bildschirmfläche einen gleichmäßig hellen, Licht aussendenden Hintergrund bildet. Vor diesen hellen Hintergrund können Röntgenfilme angebracht und betrachtet werden.

Darüber hinaus umfasst die Workstationeinrichtung 20 ein Bedienfeld 24 zur Steuerung der Workstationeinrichtung 20 und/oder zum Modifizieren der erfassten Bildinformation. Das Bedienfeld 24 ist vorzugsweise als sogenanntes Touch Screen ausgebildet, bei welchem in einer entsprechend ausgestalteten Anzeigeeinrichtung Symbole für einzelne Steuerungselemente und/oder Betriebsmodi angezeigt und durch Berühren betätigt bzw. ausgewählt werden können.

Vorzugsweise werden der Bildschirm 22 und das Bedienfeld 24 in einem einzigen Touch Screen zusammengefaßt, bei welchem in der Anzeigeeinrichtung neben den Steuerungselementen und/oder Betriebsmodi auch die erfaßten digitalen Bildinformationen darstellt werden. Hierdurch wird eine einfach herzustellende und besonders kompakte Variante der Vorrichtung erhalten.

Alternativ zu der in Figur 1 dargestellten Workstationeinrichtung 20 kann diese auch lediglich einen Bildschirm 22 oder ein Bedienfeld 24 aufweisen. Eine Kombination dieser beiden Elemente, die eine Einheit bilden, hat jedoch den Vorteil, dass jede Modifizierung der Bildinformation zeitgleich auf dem Bildschirm 22 dargestellt werden kann, wodurch der Anwender der Vorrichtung den jeweiligen Effekt der Modifizierungen unmittelbar kontrollieren kann.

Durch das Bedienfeld 24 können auch die anderen Komponenten der Vorrichtung bedient werden, so dass das Bedienfeld 24 als zentrale Steuerplattform dient.

Wie aus Figur 1 ersichtlich ist, ist der Bildschirm 22 im Wesentlichen parallel zu einer größten Seitenfläche der Workstationeinrichtung 20 angeordnet. Durch Verwendung eines oben beschriebenen Flachbildschrims wird so eine besonders flache Gestaltung, also eine geringe Gerätetiefe, der Workstationeinrichtung 20 gewährleistet.

Als eine dritte Komponente ist eine Hardcopyeinrichtung 26 vorgesehen. Diese Hardcopyeinrichtung 26 dient der Herstellung einer Hardcopy mit der ausgelesenen Bildinformation des Bildträgers ausgehend von einem Hardcopyrohling, wie z.B. einem entsprechend geeigneten Bogen aus Papier, beschichtetem Papier oder Kunststofffolie. Ein Gehäusebereich der Hardcopyeinrichtung 26 bildet eine Kassettenhalterung 28, welche zur Aufnahme wenigstens einer Kassette 13 ausgebildet ist.

Außerdem kann das Innere des Gehäuses 30 zur Aufnahme von Hardcopyrohlingen ausgebildet sein, wobei das Gehäuse 30 insbesondere im Bereich der Kassettenhalterung 28 geöffnet werden kann, um die Hardcopyrohlinge in die Hardcopyeinrichtung 26 einzuführen.

Für fertige Hardcopies, gegebenenfalls aber auch für Hardcopyrohlinge, ist eine vorzugsweise lösbar am Gehäuse 30 der Hardcopyeinrichtung 26 befestigte Halterung 32 vorgesehen. Die Halterung 32 ist im dargestellten Beispiel eine Auflagefläche mit einer Stoßkante am unteren Ende der Fläche, die in einem flachen Winkel zur Vertikalen geneigt ist.

Da die Hardcopyrohlinge bzw. die Hardcopies stets parallel zur größten Seitenfläche der Hardcopyeinrichtung 26 aufgenommen, gelagert sowie während des Bedruckens transportiert und ausgegeben werden, ist eine äußerst flache Ausgestaltung der Hardcopyeinrichtung 26 realisiert.

Die Workstationeinrichtung 20 kann nun entweder vor dem Gehäuse 12 des Scanners 10 und/oder vor dem Gehäuse 30 der Hardcopyeinrichtung 26 angeordnet und an dem jeweiligen Gehäuse 12 bzw. 30, vorzugsweise lösbar, befestigt werden. Sowohl die Hardcopyeinrichtung 26 als auch der Scanner 10 können zur Verbindung mit der Workstationeinrichtung 20 sogenannte "plug and play"-Anschlüsse 34 und 36 aufweisen. Durch die Verbindung der einzelnen Komponenten mittels "plug and play"-Anschlüssen kann ein Daten- und Stromfluß zwischen den Komponenten auf einfache Weise realisiert werden. Mindestens ein entsprechender Anschluß, der in Figur 1 aus perspektivischen Gründen nicht zu sehen ist, befindet sich an der Workstationeinrichtung 20. Durch die "plug and play"-Anschlüsse wird ein einfaches Zusammensetzen der einzelnen Komponenten ermöglicht, ohne die Komponenten durch Leitungen verbinden zu müssen.

Dieses modulare System wird außerdem durch geeignete Ausgestaltungen zur mechanische Kopplung der Komponenten, wie z. B. einfach lösbare Klemm- und/oder Schnappverbindungen am Gehäuse 12 bzw. 30 der Komponenten, ergänzt. Je nach Ausgestaltung der Komponenten kann vorgesehen sein, dass, wie hier für das Halterungselement 16 beispielhaft gezeigt, einzelne Elemente vor der modularen Kopplung entfernt werden müssen.

Neben den oben beschriebenen Kombinationen kann beispielsweise auch eine Kopplung von Scanner 10 und Hardcopyeinrichtung 26 oder eine Kombination von Hardcopyeinrichtung 26 und Workstationeinrichtung 20 vorgesehen sein.

Bei der Kombination von Scanner 10 und Hardcopyeinrichtung 26 kann die erfasste Bildinformation, ohne vorher auf einem Bildschirm 22 betrachtet zu werden, als Hardcopy ausgegeben werden. Ein solches System ist für solche Anwendungsfälle, wie z. B. Standarduntersuchungen oder Untersuchungsreihen, besonders geeignet, in denen Hardcopies einer großen Anzahl von Röntgenbildern angefertigt werden müssen, ohne dass eine vorherige visuelle Kontrolle und gegebenenfalls Manipulation der erfassten Bilddaten erwünscht oder erforderlich ist.

Besonders bevorzugt ist die Ausführungsform mit allen drei Komponenten, nämlich Scanner 10, Workstationeinrichtung 20 und Hardcopyeinrichtung 26. Wie bei der Verbindung von zwei Komponenten kann die Hardcopyeinrichtung 26 zu diesem Zweck durch "plug and play"-Anschlüsse 37 und zusätzlich gegebenenfalls auch durch mechanische Ausgestaltungen mit dem Scanner 10 verbunden werden. Diese beiden Komponenten sind dann entlang einer Ebene nebeneinander angeordnet. Die Kassettenhalterung 28 der Hardcopyeinrichtung 26 kann in diesem Fall genauso wie bei einer Kombination von Scanner 10 und Hardcopyeinrichtung 26 der Zuführung von Kassetten 13 in die Öffnung 18 des Scanners 10 dienen. Diese Funktion kann auch realisiert werden, wenn die Hardcopyeinrichtung 26 lediglich nahe dem Scanner 10 angeordnet ist, wobei die Kassettenhalterung 28 in diesem Fall entsprechend modifiziert werden muß. Außerdem ist eine Verbindung von Scanner 10 und Hardcopyeinrichtung 26 durch ein Zwischenelement denkbar, das gegebenenfalls auch zur Bereitstellung der Kassette für den Scanner 10 beitragen kann.

Es ist außerdem zu berücksichtigen, dass auch die Kombination von Workstationeinrichtung 20 und Hardcopyeinrichtung 26, wie sie in der Figur 1 dargestellt ist, mit dem Scanner seitlich verbunden werden kann.

Durch die Kombination der drei Elemente Scanner 10, Workstationeinrichtung 20 und Hardcopyeinrichtung 26 wird ein äußerst kompaktes System bereitgestellt, das alle Funktionen eines herkömmlichen, sehr viel Raum einnehmenden Röntgenarbeitsplatzes bestens erfüllt. Im Gegensatz zu den aus dem Stand der Technik bekannten "stand alone"-Geräten ermöglicht die Erfindung eine vollständige Installation des Röntgenarbeitsplatzes in einem Röntgenraum, der durch die notwendige Abschirmung räumlich meist sehr begrenzt ist.

In Figur 2 ist eine weitere alternative Ausführungsform einer Vorrichtung zur Durchführung eines digitalen Radiographie-Verfahrens schematisch dargestellt. Auch hier besteht die Vorrichtung aus einem Scanner (nicht sichtbar), vor dem eine Workstationeinrichtung 20 angebracht ist und neben dem eine Hardcopyeinrichtung 26 positioniert ist. Auch diese Hardcopyeinrichtung 26 weist eine Halterung 32 für mindestens eine Hardcopy und/oder mindestens einen Hardcopyrohling auf. Unterhalb der Workstationeinrichtung 20 ist außerdem eine zur Aufnahme mehrerer Kassetten 13 ausgebildete weitere Kassettenhalterung 40 vorgesehen, in welcher die Kassetten 13 vorzugsweise vor und/oder nach dem Auslesen im Scanner 10 gelagert werden können. Die Kassettenhalterung 40 kann entweder am Scanner oder an der Workstationeinrichtung 20, insbesondere lösbar, befestigt sein.

Soll die Bildinformation eines in einer Kassette 13 befindlichen Bildträgers ausgelesen werden, wird die entsprechende Kassette 13 von einem Bediener aus der Kassettenhalterung 40 entnommen und an der Öffnung 18 des Scanners positioniert. Die Kassette 13 wird hierzu an die Kassettenhalterung 28 am Gehäuse 30 der Hardcopyeinrichtung 26 angelegt und schließlich zur Öffnung 18 des Scanners geführt. Diese Position der Kassette 13 ist auch im rechten unteren Teil des in Figur 1 dargestellten Ausführungsbeispiels gezeigt. Von dieser Position aus kann der in der Kassette 13 befindliche Bildträger mit einem, vorzugsweise im Scanner befindlichen, Transportmechanismus aus der Kassette 13 in den Scanner eingezogen und dort ausgelesen werden. Nach dem Auslesen wird der Bildträger wieder in die Kassette 13 zurückgeführt, wonach diese von der Öffnung 18 des Scanners entfernt und gegebenenfalls wieder in der Kassettenhalterung 40 abgelegt werden kann.

Figur 3 zeigt den in Figur 1 dargestellten Scanner 10 in einer vergrößerten Frontansicht. Die Ausführungen im Zusammenhang mit dem in Figur 1 beschriebenen Scanner 10 gelten entsprechend. Eine Rückansicht dieses Scanners 10 ist schematisch in Figur 4 wiedergegeben. In dieser Ansicht sind Ausgestaltungen zur Aufhängung 42 dargestellt. Diese Ausgestaltungen 42 können mit an einer Wand vorgesehenen Schienen oder anderen Befestigungselementen wechselwirken, die eine Höhenverstellbarkeit erlauben. Alternativ kann die Höhenverstellbarkeit auch durch entsprechende Ausgestaltungen 42 zur Aufhängung an dem Gehäuse 12 des Scanners 10 erreicht werden. Die Höhenverstellbarkeit ist äußerst vorteilhaft, da auf diese Weise die Position des Scanners 10 den individuellen Bedürfnissen angepasst werden kann. Durch die Aufhängung des Scanners 10 wird gleichzeitig eine Aufhängung der anderen mit dem Scanner verbundenen Komponenten erreicht.

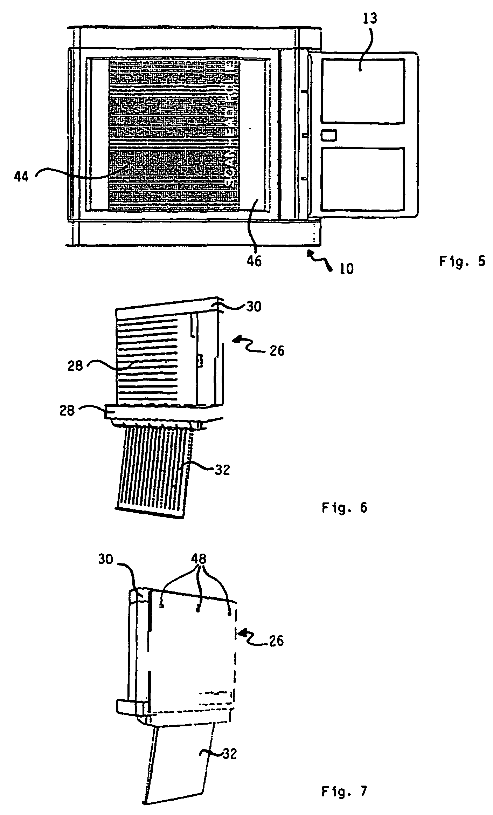

In Figur 5 ist der Scanner 10 in einer aufgehängten Stellung teilweise im Querschnitt dargestellt. In diesem Beispiel liegt der mittels einer geeigneten Transporteinrichtung (nicht dargestellt) aus der Kassette 13 entnommene Bildträger 44 auf einer Scanbühne 46 im Inneren des Scanners 10 und kann in dieser Lage ausgelesen werden. Die Scanbühne 46 ist im Wesentlichen parallel oder leicht geneigt zu der Wand angeordnet, an welcher der Scanner 10 aufgehängt ist. Dadurch wird eine besonders flache Ausführung des Scanners 10 gewährleistet, wobei eine Gerätetiefe von weniger als 30 cm erreicht wird.

Die Bildinformation wird vorzugsweise zeilenweise ausgelesen, wobei ein beweglicher Scankopf über den auf der Scanbühne 46 im Scanner 10 liegenden Bildträger 44 bewegt wird oder der Bildträger 44 an einem stationären Scankopf vorbeibewegt wird. Letzeres erfolgt vorzugsweise während der Entnahme des Bildträgers 44 aus der Kassette 13 oder dessen Rückführung in die Kassette 13. Der entsprechende stationäre Scankopf ist hierbei im Bereich der Öffnung 18 im Innem des Scanners 10 angeordnet.

Zur Erreichung einer möglichst geringen Gerätetiefe des Scanners 10 ist ein besonders kompakter Aufbau des Scankopfes erforderlich. Der Scankopf weist hierzu eine linienförmige Lichtquelle zur Beleuchtung eines linienförmigen Bereichs des Bildträgers und einen linienförmigen Detektor zur ortsaufgelösten Erfassung des im beleuchteten Bereich des Bildträgers angeregten Emissionslichts auf. Als Lichtquelle werden vorzugsweise Leuchtdioden oder Laserdioden eingesetzt, die in der Weise entlang einer Reihe angeordnet sind, dass sich deren Lichtstrahlen derart überlagern, dass auf dem Bildträger ein linienförmiger Bereich mit im Wesentlichen konstanter Intensität beleuchtet wird. Als ortsauflösender Detektor wird vorzugsweise ein lineares Array aus Photodioden oder Charge-Coupled-Devices (CCDs) eingesetzt. Ein derart aufgebauter Scankopf erlaubt ein zeilenweises und damit schnelles Auslesen von Bildinformation aus dem Bildträger und ist darüber hinaus sehr kompakt, so daß hierdurch eine sehr geringe Gerätetiefe des Scanners 10 und damit auch der gesamten Vorrichtung zur Durchführung eines digitalen Radiographie-Verfahrens erzielt wird.

Werden Scankopf und Bildträger mit einem geeigneten Transportmechanismus kontinuierlich relativ zueinander bewegt und dabei sukzessive Zeile für Zeile der Bildinformation des Bildträgers ausgelesen, werden schließlich Daten eines Gesamtbildes der im Bildträger gespeicherten Bildinformation erhalten. Die, insbesondere digitalen, Daten können dann in einer zentralen Recheneinheit, insbesondere in der Workstationeinrichtung 20, verarbeitet, dargestellt und/oder gespeichert werden.

Ein entsprechender Transportmechanismus zur Bewegung des Scankopfes über den Bildträger umfaßt vorzugsweise einen Linearantrieb, bei welchem die Rotationsbewegung eines Antriebsmotors in eine Linearbewegung eines Seilantriebs, durch welchen der Scankopf bewegt wird, umgesetzt wird. Der Scankopf wird hierbei bevorzugt an der Scanbühne 46 selbst geführt, wobei die Scanbühne entsprechende separate Führungsflächen aufweisen kann, an welchen der Scankopf geführt wird. Auf diese Weise werden besonders geringe Abstands- und Lagetoleranzen bei gleichzeitig kompaktem Aufbau des Transportmechanismus erreicht.

Als kompakter und zuverlässiger Mechanismus zur Bewegung des Bildträgers am stationären Scankopf vorbei eignet sich beispielsweise ein im Scanner 10 angeordneter Greifarm, welcher zum Herausziehen des Bildträgers aus der Kassette und zum Hineinschieben des Bildträgers in die Kassette geeignet ist und dabei den Bildträger am Scankopf kontinuierlich vorbeibewegt, so daß ein sukzessives zeilenweises Auslesen der Bildinformation erfolgen kann. Der Bildträger weist hierzu geeignete Konturen auf, insbesondere Aussparungen, in welche der Greifarm eingreifen kann.

Im Scanner 10 kann außerdem eine Löscheinrichtung (nicht dargestellt), insbesondere eine Löschlampe, vorgesehen sein, mit deren Hilfe die Bildinformation des Bildträgers nach dem Ausleseprozess gelöscht wird, damit der Bildträger für eine erneute Röntgenaufnahme verwendet werden kann. Die Löscheinrichtung kann im Scanner 10 derart angebracht und angesteuert sein, dass eine vollständige Löschung der nach dem Auslesen im Bildträger verbliebenen Bildinformation während der Rückführung des Bildträgers in die Kassette erfolgt. Dies wird beispielsweise durch eine Anordnung der Löscheinrichtung im Bereich der Öffnung 18 des Scanners 10 und ein Einschalten der Löscheinrichtung während der Rückführung des Bildträgers erreicht. Alternativ kann die Löscheinrichtung am Scankopf angebracht sein und mit diesem über den Bildträger bewegt werden. In einer weiteren Alternative kann das von der Löschlampe ausgehende Licht mit geeigneten optischen Mitteln, wie z.B. Spiegeln und/oder lichtstreuenden Mitteln, derart im Inneren des Scanners 10 verteilt werden, daß ein Löschen der gesamten Fläche des Bildträgers auf einmal möglich ist. Die Löschlampe wird hierbei zum gegebenen Zeitpunkt kurz ein- und wieder ausgeschaltet.

In Figur 6 ist eine vergrößerte schematische Frontansicht einer Hardcopyeinrichtung 26 dargestellt, wobei die Ausführungen zu Figur 1 entsprechend gelten. Wie aus der Rückansicht dieser Hardcopyeinrichtung 26 in Figur 7 hervorgeht, kann auch die Hardcopyeinrichtung 26 Ausgestaltungen 48 zur Aufhängung aufweisen, die der Wandmontage dienen. Auch hier kann eine Höhenverstellbarkeit durch entsprechende Modifizierung der Ausgestaltungen 48 und/oder der entsprechenden Befestigungselemente an der Wand und/oder durch eine demgemäß geartete Aufhängevorrichtung realisiert werden. Bei einer Kombination von Scanner 10 und Hardcopyeinrichtung 26 können beide Komponenten oder nur der Scanner entsprechende Ausgestaltungen zur Aufhängung aufweisen, da die Komponenten so koppelbar sind, dass die Hardcopyeinrichtung 26 durch den Scanner 10 bei der Wandmontage gehalten wird.

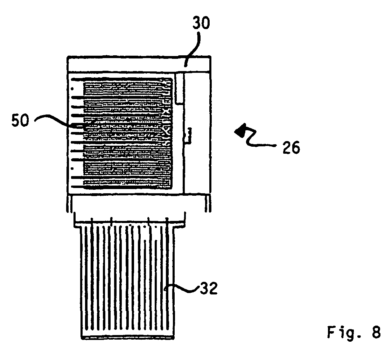

In Figur 8 ist die Hardcopyeinrichtung 26 teilweise im Querschnitt an einer Wand montiert dargestellt. Es ist zu erkennen, dass die Hardcopyrohlinge 50 im Innern der Hardcopyeinrichtung 26 nahezu parallel zur größten Seitenfläche der Hardcopyeinrichtung 26 und damit auch parallel zur Wand gelagert werden können und dass diese entlang einer ebenfalls parallelen oder leicht geneigten Printebene positionierbar sind. Auch der Transport der Hardcopyrohlinge bzw. der Hardcopies kann im Wesentlichen parallel zu einer größten Seitenfläche der Hardcopyeinrichtung 26 und damit auch parallel zur Wand, an der die Hardcopyeinrichtung 26 aufgehängt ist, erfolgen. Auf diese Weise kann die Gerätetiefe der Hardcopyeinrichtung 26 auf weniger als 30 cm minimiert werden.

Wie im Zusammenhang mit den Ausführungsbeispielen näher erläutert wurde, erfolgt die Wandmontage der einzelnen Komponenten, d. h. des Scanners 10 und/oder der Workstationeinrichtung 20 und/oder der Hardcopyeinrichtung 26, vorzugsweise hängend. Eine Wandmontage der jeweiligen Komponente kann jedoch prinzipiell auf jede Art der Anbringung an eine Wand erfolgen, bei welcher keine Standfläche für die jeweilige Komponente auf dem Boden erforderlich ist. Die jeweilige Komponente ist dabei im Wesentlichen nur an der Wand befestigt. Die Befestigung an der Wand kann hierbei direkt, z. B. durch Aufhängen, Festschrauben und dergleichen, oder indirekt, z.B. durch Aufstellen oder Einsetzen der Komponente auf bzw. in eine an der Wand befestigte Halterung oder durch Anbringen an ein an der Wand befestigtes und zur Höhenverstellung der Komponente ausgebildetes Halterungssystem, erfolgen.

Die erfindungsgemäße Wandmontage der kompakten Vorrichtung erlaubt in vielen Fällen eine Integration dieser Vorrichtung in einem Röntgenraum, obwohl dort der zur Verfügung stehende Standplatz meist durch den hohen Abschirmaufwand begrenzt ist. Die Integration der Vorrichtung in den Röntgenraum führt zu erheblichen Vorteilen im Arbeitsablauf einer Röntgenuntersuchung, da hierdurch eine schnelle Kontrolle der Aufnahmequalität in Form einer Darstellung der erfaßten Bilddaten auf einem Bildschirm und/oder einer Hardcopy ermöglicht wird und ein Verlassen des Röntgenraums bzw. des in diesem Raum befindlichen Patienten zur Diagnose anhand der Röntgenaufnahme nicht mehr erforderlich ist. Die Aufhängung innerhalb des Röntgenraums kann insbesondere dort erfolgen, wo vorher ein konventioneller Leuchtschirm angebracht war, um einen Röntgenfilm zu betrachten.

## Patentansprüche

1. Vorrichtung zum Auslesen und Drucken einer Bildinformation aus einem fotostimulierbaren Bildträger (44) mit einem ersten Gehäuse (12), in dem ein Scanner (10) zum Erfassen der Bildinformation des Bildträgers (44) vorgesehen ist, wobei das erste Gehäuse (12) eine Öffnung (18) zum Zuführen des in einer Kassette (13) befindlichen Bildträgers (44) zu dem Scanner (10) aufweist, **dadurch gekennzeichnet, dass** ein zweites Gehäuse (30) einer Hardcopyeinrichtung (26) so ausgebildet und nahe dem ersten Gehäuse (12) so angeordnet ist, dass das zweite Gehäuse (30) zum Positionieren der Kassette (13) an der Öffnung (18) des ersten Gehäuses (12) dient.

2. Vorrichtung nach Anspruch 1, **dadurch gekennzeichnet, dass** das zweite Gehäuse (30) direkt oder indirekt mit dem ersten Gehäuse (12) verbunden ist.

3. Vorrichtung nach einem der vorhergehenden Ansprüche, **dadurch gekennzeichnet, dass** die Vorrichtung eine Workstationeinrichtung (20) zum Sichtbarmachen der erfassten Bildinformation aufweist, die an dem ersten Gehäuse (12) angebracht ist.

4. Vorrichtung nach Anspruch 3, **dadurch gekennzeichnet, dass** die Workstationeinrichtung (20) einen Bildschirm (22) und/oder ein Bedienfeld (24) aufweist.

5. Vorrichtung nach Anspruch 4, **dadurch gekennzeichnet, dass** der Bildschirm (22) und/oder das Bedienfeld (24) im Wesentlichen parallel zu einer größten Seitenfläche des ersten Gehäuses (12) und/oder eines dritten Gehäuses der Workstationeinrichtung (20) angeordnet ist.

6. Vorrichtung nach einem der Ansprüche 3 bis 5, **dadurch gekennzeichnet, dass** die Workstationeinrichtung (20) zum Sichtbarmachen der erfassten Bildinformation im Wesentlichen vor dem ersten Gehäuse (12) angeordnet ist.

7. Vorrichtung nach einem der vorhergehenden Ansprüche, **dadurch gekennzeichnet, dass** das erste Gehäuse (12) und/oder das zweite Gehäuse (30) und/oder ein drittes Gehäuse der Workstationeinrichtung (20) modular zusammensetzbar sind.

8. Vorrichtung nach einem der vorhergehenden Ansprüche, **dadurch gekennzeichnet, dass** das erste Gehäuse (12) und/oder das zweite Gehäuse (30) und/oder ein drittes Gehäuse der Workstationeinrichtung (20) mit jeweils einer größten Seitenfläche im Wesentlichen parallel angeordnet sind.

9. Vorrichtung nach einem der vorhergehenden Ansprüche, **dadurch gekennzeichnet, dass** das erste (12) und das zweite Gehäuse (30) mit jeweils einer größten Seitenfläche im Wesentlichen entlang einer Ebene angeordnet sind.

10. Vorrichtung nach einem der vorhergehenden Ansprüche, **dadurch gekennzeichnet, dass** die Vorrichtung zur Wandmontage ausgebildet ist.

11. Vorrichtung nach Anspruch 10, **dadurch gekennzeichnet, dass** das erste Gehäuse (12) und/oder das zweite Gehäuse (30) zu einer hängenden Wandmontage mindestens eine Ausgestaltung (42; 48) zur Aufhängung an eine Wand, insbesondere mindestens ein Aufhängeelement, aufweist.

12. Vorrichtung nach Anspruch 11, **dadurch gekennzeichnet, dass** die mindestens eine Ausgestaltung (42; 48) zur Aufhängung derart ausgebildet ist, dass die Vorrichtung höhenverstellbar ist.

13. Vorrichtung nach einem der Ansprüche 10 bis 12, **dadurch gekennzeichnet, dass** die Vorrichtung derart zur Wandmontage ausgebildet ist, dass eine größte Seitenfläche des ersten (12) und/oder des zweiten Gehäuses (30) bei der Wandmontage im Wesentlichen parallel zu einer Wand positionierbar ist.

14. Vorrichtung nach einem der vorhergehenden Ansprüche, **dadurch gekennzeichnet, dass** die Öffnung (18) des Scanners (10) derart ausgebildet ist, dass der in der Kassette (13) befindliche Bildträger (44) entlang einer Ebene parallel zu einer größten Seitenfläche des ersten Gehäuses (12) in den Scanner (10) einführbar ist.

15. Vorrichtung nach einem der vorhergehenden Ansprüche, **dadurch gekennzeichnet, dass** der Scanner (10) derart ausgebildet ist, dass der fotostimulierbare Bildträger (44) innerhalb des Scanners (10) im Wesentlichen parallel zu einer größten Seitenfläche des ersten Gehäuses (12) auslesbar und/oder bewegbar ist.

16. Vorrichtung nach einem der vorhergehenden Ansprüche, **dadurch gekennzeichnet, dass** die von dem zweiten Gehäuse (30) geführte mindestens eine Kassette (13) im Wesentlichen parallel zu einer größten Seitenfläche des ersten (12) und/oder zweiten Gehäuses (30) angeordnet ist.

17. Vorrichtung nach einem der vorhergehenden Ansprüche, **dadurch gekennzeichnet, dass** das zweite Gehäuse (30) zur Aufnahme von Hardcopyrohlingen ausgebildet ist und ein Abdeckelement, insbesondere eine Kassettenhalterung (28), aufweist, das zum Positionieren der Kassette (13) an der Öffnung (18) des ersten Gehäuses (12) dient.

18. Vorrichtung nach einem der vorhergehenden Ansprüche, **dadurch gekennzeichnet, dass** in dem ersten Gehäuse (12) der Vorrichtung eine Löscheinrichtung zum Löschen der Bildinformation des Bildträgers (44) vorgesehen ist.

19. Vorrichtung nach einem der vorhergehenden Ansprüche, **dadurch gekennzeichnet, dass** der Scanner (10) einen Scankopf zum Erfassen der Bildinformation des Bildträgers (44) umfaßt und der Scankopf
- eine Lichtquelle zur Beleuchtung des Bildträgers (44) mit Anregungslicht, welches zur Anregung von Emissionslicht im Bildträger (44) geeignet ist, und
- einen Detektor zum Erfassen des im beleuchteten Bildträger (44) angeregten Emissionslichts
aufweist.

20. Vorrichtung nach Anspruch 19, **dadurch gekennzeichnet, dass** die Lichtquelle zur Beleuchtung eines linienförmigen Bereichs auf dem Bildträger (44) ausgebildet ist.

21. Vorrichtung nach Anspruch 20, **dadurch gekennzeichnet, dass** die Lichtquelle eine Vielzahl von in einer geraden Linie angeordneten Leuchtmitteln, insbesondere Leuchtdioden (LEDs) und/oder Laserdioden, aufweist.

22. Vorrichtung nach einem der Ansprüche 19 bis 21, **dadurch gekennzeichnet, dass** der Detektor zum ortsaufgelösten Erfassen des, insbesondere im linienförmigen Bereich des Bildträgers (44), angeregten Emissionslichts ausgebildet ist.

23. Vorrichtung nach Anspruch 22, **dadurch gekennzeichnet, dass** der Detektor eine Vielzahl von entlang einer geraden Linie angeordneten Detektorelementen, insbesondere Photodioden oder Charge-Coupled-Devices (CCDs), aufweist.

24. Vorrichtung nach einem der Ansprüche 19 bis 23, **dadurch gekennzeichnet, dass** ein erster Transportmechanismus zur Bewegung des Scankopfes über den Bildträger (44) vorgesehen ist.

25. Vorrichtung nach Anspruch 24, **dadurch gekennzeichnet, dass** der erste Transportmechanismus als Linearantrieb ausgebildet ist, welcher einen Antriebsmotor und einen Seilantrieb umfaßt, wobei der Antriebsmotor und der Seilantrieb derart miteinander gekoppelt sind, daß eine Rotationsbewegung des Antriebsmotors in eine Linearbewegung des Seilantriebs umgesetzt wird.

26. Vorrichtung nach einem der Ansprüche 19 bis 25, **dadurch gekennzeichnet, dass** eine Scanbühne (46) vorgesehen ist, auf welcher der Bildträger (44) aufliegen und an welcher der Scankopf geführt werden kann.

27. Vorrichtung nach Anspruch 26, **dadurch gekennzeichnet, dass** die Scanbühne (46) separate Führungsflächen aufweist, an welchen der Scankopf geführt werden kann.

28. Vorrichtung nach einem der Ansprüche 19 bis 27, **dadurch gekennzeichnet, dass** ein zweiter Transportmechanismus zur Bewegung des Bildträgers (44) am Scankopf vorbei vorgesehen ist.

29. Vorrichtung nach Anspruch 28, **dadurch gekennzeichnet, dass** der zweite Transportmechanismus mindestens einen Greifarm zur Entnahme eines in einer Kassette (13) bereitgestellten Bildträgers (44) und/oder zur Rückführung eines herausgezogenen Bildträgers (44) in die Kassette (13) umfaßt, wobei der Bildträger (44) während der Entnahme bzw. Rückführung am Scankopf vorbei bewegt wird.

## Claims

1. Device for reading and printing image information from a photostimulable image medium (44), having a first housing (12) in which a scanner (10) for recording the image information of the image medium (44) is provided, the first housing (12) having an opening (18) for feeding the image medium (44) located in a cassette (13) to the scanner (10), **characterised in that** a second housing (30) of a hardcopy unit (26) is designed and arranged close to the first housing (12) so that the second housing (30) serves to position the cassette (13) at the opening (18) of the first housing (12).

2. Device according to Claim 1, **characterised in that** the second housing (30) is connected directly or indirectly to the first housing (12).

3. Device according to one of the preceding claims, **characterised in that** the device has a workstation unit (20) for visualising the recorded image information, which is fitted on the first housing (12).

4. Device according to Claim 3, **characterised in that** the workstation unit (20) has a display screen (22) and/or a control panel (24).

5. Device according to Claim 4, **characterised in that** the display screen (22) and/or the control panel (24) is essentially arranged parallel to a largest side face of the first housing (12) and/or a third housing of the workstation unit (20).

6. Device according to one of Claims 3 to 5, **characterised in that** the workstation unit (20) for visualising the recorded image information is arranged essentially in front of the first housing (12).

7. Device according to one of the preceding claims, **characterised in that** the first housing (12) and/or the second housing (30) and/or a third housing of the workstation unit (20) can be assembled modularly.

8. Device according to one of the preceding claims, **characterised in that** the first housing (12) and/or the second housing (30) and/or a third housing of the workstation unit (20) are respectively arranged with a largest side face essentially parallel.

9. Device according to one of the preceding claims, **characterised in that** the first housing (12) and the second housing (30) are respectively arranged with a largest side face essentially along a plane.

10. Device according to one of the preceding claims, **characterised in that** the device is designed for wall mounting.

11. Device according to Claim 10, **characterised in that** the first housing (12) and/or the second housing (30) have at least one arrangement (42; 48) for suspending on a wall, in particular at least one suspension element, for suspended wall mounting.

12. Device according to Claim 11, **characterised in that** the at least one arrangement (42; 48) for suspension is designed so that the device is height-adjustable.

13. Device according to one of Claims 10 to 12, **characterised in that** the device is designed for wall mounting so that a largest side face of the first housing (4) and/or the second housing (30) can be positioned essentially parallel to a wall during the wall mounting.

14. Device according to one of the preceding claims, **characterised in that** the opening (18) of the scanner (10) is designed so that the image medium (44) located in the cassette (13) can be inserted into the scanner (10) along a plane parallel to a largest side face of the first housing (12).

15. Device according to one of the preceding claims, **characterised in that** the scanner (10) is designed so that the photostimulable image medium (44) can be read and/or moved inside the scanner (10) essentially parallel to a largest side face of the first housing (12).

16. Device according to one of the preceding claims, **characterised in that** the at least one cassette (13) guided by the second housing (30) is arranged essentially parallel to a largest side face of the first housing (12) and/or the second housing (30).

17. Device according to one of the preceding claims, **characterised in that** the second housing (30) is designed to hold hardcopy blanks and has a cover element, in particular a cassette holder (28), which serves to position the cassette (13) at the opening (18) of the first housing (12).

18. Device according to one of the preceding claims, **characterised in that** an erasing unit for erasing the image information of the image medium (44) is provided in the first housing (12) of the device.

19. Device according to one of the preceding claims, **characterised in that** the scanner (10) comprises a scanning head for recording the image information of the image medium (44), and the scanning head has
- a light source for illuminating the image medium (44) with stimulation light, which is suitable for stimulating emission light in the image medium (44), and
- a detector for recording the emission light stimulated in the illuminated image medium (44).

20. Device according to Claim 19, **characterised in that** the light source is designed for illuminating a linear region on the image medium (44).

21. Device according to Claim 20, **characterised in that that** the light source has a multiplicity of lighting means arranged in a straight line, in particular light-emitting diodes (LEDs) and/or laser diodes.

22. Device according to one of Claims 19 to 21, **characterised in that** the detector is designed for spatially resolved recording of the emission light which is stimulated, particularly in the linear region of the image medium (44).

23. Device according to Claim 22, **characterised in that** the detector has a multiplicity of detector elements arranged along a straight line, in particular photodiodes or charge-coupled devices (CCDs).

24. Device according to one of Claims 19 to 23, **characterised in that** a first transport mechanism is provided for moving the scanning head over the image medium (44).

25. Device according to Claim 24, **characterised in that** the first transport mechanism is designed as a linear drive which comprises a drive motor and a cable drive, the drive motor and the cable drive being coupled with one another so that a rotational movement of the drive motor is converted into a linear movement of the cable drive.

26. Device according to one of Claims 19 to 25, **characterised in that** a scanning stage (46) is provided, on which the image medium (44) rests and where the scanning head can be guided.

27. Device according to Claim 26, **characterised in that** the scanning stage (46) has separate guide surfaces, where the scanning head can be guided.

28. Device according to one of Claims 19 to 27, **characterised in that** a second transport mechanism is provided for moving the image medium (44) past the scanning head.

29. Device according to Claim 28, **characterised in that** the second transport mechanism comprises at least one gripping arm for picking up an image medium (44) provided in a cassette (13) and/or replacing an extracted image medium (44) into the cassette (13), the image medium (44) being moved past the scanning head during the pickup or replacement.

## Revendications

1. Dispositif destiné à la lecture et à l'impression d'une information d'image à partir d'un support d'images (44) pouvant être photo-stimulé, comportant un premier boîtier (12) dans lequel est prévu un scanneur (10) pour la saisie de l'information d'image du support d'images (44), le premier boîtier (12) étant pourvu d'une ouverture (18) pour l'amenée au scanneur (10) du support d'images (44) se trouvant dans une cassette (13), **caractérisé en ce qu'**un deuxième boîtier (30) d'un dispositif de sortie sur copie dure (26) est agencé, et disposé à proximité du premier boîtier (12), de telle sorte que le deuxième boîtier (30) serve au positionnement de la cassette (13) au niveau de l'ouverture (18) du premier boîtier (12).

2. Dispositif selon la revendication 1, **caractérisé en ce que** le deuxième boîtier (30) est relié directement ou indirectement au premier boîtier (12).

3. Dispositif selon l'une des revendications précédentes, **caractérisé en ce que** le dispositif comporte un poste de travail (20) pour la visualisation de l'information d'image saisie, qui est fixé sur le premier boîtier (12).

4. Dispositif selon la revendication 3, **caractérisé en ce que** le poste de travail (20) comporte un écran (22) et/ou un panneau de commande (24).

5. Dispositif selon la revendication 4, **caractérisé en ce que** l'écran (22) et/ou le panneau de commande (24) sont pour l'essentiel disposés parallèlement à une surface latérale la plus grande du premier boîtier (12) et/ou d'un troisième boîtier du poste de travail (20).

6. Dispositif selon l'une des revendications 3 à 5, **caractérisé en ce que** le poste de travail (20) pour la visualisation de l'information d'image saisie est pour l'essentiel disposé devant le premier boîtier (12).

7. Dispositif selon l'une des revendications précédentes, **caractérisé en ce que** le premier boîtier (12) et/ou le deuxième boîtier (30) et/ou un troisième boîtier du poste de travail (20) peuvent être assemblés de façon modulaire.

8. Dispositif selon l'une des revendications précédentes, **caractérisé en ce que** le premier boîtier (12) et/ou le deuxième boîtier (30) et/ou un troisième boîtier du poste de travail (20) sont disposés pour l'essentiel parallèlement par une surface latérale respective la plus grande.

9. Dispositif selon l'une des revendications précédentes, **caractérisé en ce que** le premier boîtier (12) et le deuxième boîtier (30) sont disposés pour l'essentiel le long d'un plan par une surface latérale respective la plus grande.

10. Dispositif selon l'une des revendications précédentes, **caractérisé en ce que** le dispositif est agencé pour un montage mural.

11. Dispositif selon la revendication 10, **caractérisé en ce que**, pour un montage mural suspendu, le premier boîtier (12) et/ou le deuxième boîtier (30) comportent au moins un agencement (42 ; 48) pour la suspension à un mur, notamment au moins un élément de suspension.

12. Dispositif selon la revendication 11, **caractérisé en ce que** l'au moins un agencement (42 ; 48) pour suspension est conçu de telle sorte que le dispositif soit réglable en hauteur.

13. Dispositif selon l'une des revendications 10 à 12, **caractérisé en ce que** le dispositif est agencé pour un montage mural de telle sorte qu'une surface latérale la plus grande du premier boîtier (12) et/ou du deuxième boîtier (30) puisse être pour l'essentiel positionnée parallèlement à un mur lors du montage mural.

14. Dispositif selon l'une des revendications précédentes, **caractérisé en ce que** l'ouverture (18) du scanneur (10) est agencée de telle sorte que le support d'images (44) se trouvant dans la cassette (13) puisse être inséré dans le scanner (10) le long d'un plan parallèle à une surface latérale la plus grande du premier boîtier (12).

15. Dispositif selon l'une des revendications précédentes, **caractérisé en ce que** le scanneur (10) est agencé de telle sorte que le support d'images (44) pouvant être photo-stimulé puisse être lu et/ou déplacé à l'intérieur du scanneur (10) pour l'essentiel parallèlement à une surface latérale la plus grande du premier boîtier (12).

16. Dispositif selon l'une des revendications précédentes, **caractérisé en ce que** la, au moins une, cassette (13) guidée par le deuxième boîtier (30) est disposée pour l'essentiel parallèlement à une surface latérale la plus grande du premier boîtier (12) et/ou du deuxième boîtier (30).

17. Dispositif selon l'une des revendications précédentes, **caractérisé en ce que** le deuxième boîtier (30) est agencé pour la réception d'éléments de départ pour copies dures, et comporte un élément de couverture, notamment un porte-cassette (28), qui sert au positionnement de la cassette (13) au niveau de l'ouverture (18) du premier boîtier (12).

18. Dispositif selon l'une des revendications précédentes, **caractérisé en ce qu'**un système d'effacement est prévu dans le premier boîtier (12) du dispositif pour l'effacement de l'information d'image du support d'images (44).

19. Dispositif selon l'une des revendications précédentes, **caractérisé en ce que** le scanneur (10) comporte une tête de balayage pour la saisie de l'information d'image du support d'images (44), et **en ce que** la tête de balayage comprend :
- une source lumineuse pour l'éclairage du support d'images (44) avec de la lumière d'excitation, qui est appropriée pour l'excitation de lumière d'émission dans le support d'images (44), et
- un détecteur pour la détection de la lumière d'émission excitée dans le support d'images (44) éclairé.

20. Dispositif selon la revendication 19, **caractérisé en ce que** la source lumineuse est agencée pour l'éclairage d'une zone linéaire sur le support d'images (44).

21. Dispositif selon la revendication 20, **caractérisé en ce que** la source lumineuse comporte une pluralité de moyens lumineux disposés en ligne droite, notamment des diodes électroluminescentes (LED) et/ou des diodes laser.

22. Dispositif selon l'une des revendications 19 à 21, **caractérisé en ce que** le détecteur est agencé pour la détection à résolution locale de la lumière d'émission excitée, notamment dans la zone linéaire du support d'images (44).

23. Dispositif selon la revendication 22, **caractérisé en ce que** le détecteur comporte une pluralité d'éléments de détection disposés le long d'une ligne droite, notamment des photodiodes ou des dispositifs à couplage de charge (CCD).

24. Dispositif selon l'une des revendications 19 à 23, **caractérisé en ce qu'**il est prévu un premier mécanisme de transport pour le déplacement de la tête de balayage au-dessus du support d'images (44).

25. Dispositif selon la revendication 24, **caractérisé en ce que** le premier mécanisme de transport est agencé sous la forme d'un entraînement linéaire, comportant un moteur d'entraînement et une commande par câble, le moteur d'entraînement et la commande par câble étant couplés entre eux de telle sorte qu'un mouvement de rotation du moteur d'entraînement soit converti en un mouvement linéaire de la commande par câble.

26. Dispositif selon l'une des revendications 19 à 25, **caractérisé en ce qu'**il est prévu un plateau de balayage (46) sur lequel peut être placé le support d'images (44), et le long duquel peut être guidée la tête de balayage.

27. Dispositif selon la revendication 26, **caractérisé en ce que** le plateau de balayage (46) comporte des surfaces de guidage séparées, le long desquelles peut être guidée la tête de balayage.

28. Dispositif selon l'une des revendications 19 à 27, **caractérisé en ce qu'**il est prévu un deuxième mécanisme de transport pour le déplacement du support d'images (44) le long de la tête de balayage.

29. Dispositif selon la revendication 28, **caractérisé en ce que** le deuxième mécanisme de transport comporte au moins un bras preneur pour prélever un support d'images (44) mis à disposition dans une cassette (13) et/ou pour ramener dans la cassette (13) un support d'images (44) retiré, le support d'images (44) étant déplacé le long de la tête de balayage pendant la prise d'image ou le retour.
